# FASCICULE DE BREVET EUROPEEN

(11) **EP 0 956 441 B1**
(45) Date de publication et mention de la délivrance du brevet: **15.01.2003**
(21) Numéro de dépôt: 97953949.1
(22) Date de dépôt: 24.12.1997
(51) Int. Cl.: F02K 9/97

(54) **DIVERGENT DEPLOYABLE POUR PROPULSEUR**
ENTFALTBARE SCHUBDÜSE
UNFOLDING INJECTOR TUBE FOR PROPULSION UNIT

(30) Priorité: 24.12.1996 FR 9615958
(43) Date de publication de la demande: 17.11.1999
(73) Titulaire: Société Nationale d'Etude et de Construction de Moteurs d' Aviation, 75015 Paris (FR)
(72) Inventeur: PERRIER, Bruno, F-33160 Saint Médard en Jalles (FR); SANS, Jean-Luc, F-33600 Pessac (FR); COLLIGNON, Laurent, F-33510 Andernos (FR)
(74) Mandataire: Joly, Jean-Jacques
(86) Numéro de dépôt international: FR9702425
(87) Numéro de publication internationale: WO98028533

(56) Documents cités:
- EP-A- 0 516 519
- EP-A- 0 661 436
- FR-A- 2 503 794
- FR-A- 2 724 979
- GB-A- 2 029 511
- US-A- 3 237 402
- US-A- 3 526 365
- US-A- 3 776 466
- US-A- 4 022 129
- US-A- 4 272 956
- US-A- 4 779 799

## Description

La présente invention a pour objet un divergent déployable pour propulseur.

Il est bien connu dans un propulseur, en particulier dans un deuxième ou troisième étage d'un lanceur multi-étages, d'utiliser des tuyères de moteur-fusée à divergent déployable. L'objet est de permettre, par un déploiement du divergent en vol, une adaptation de la section de sortie de la tuyère en fonction de la pression ambiante, laquelle diminue entre les faibles altitudes proches du sol et les altitudes élevées en sortie de l'atmosphère terrestre. De la sorte, une poussée optimale peut être obtenue en altitude, tout en limitant l'encombrement au sol.

De façon habituelle, un divergent déployable comprend une première partie de divergent qui constitue le divergent dans sa configuration initiale et qui peut être allongée par mise en place d'un ou plusieurs anneaux de divergent. Le ou chaque anneau est déplacé d'une position rétractée, dans laquelle il entoure la première partie de divergent, à une position déployée, dans laquelle il se raccorde à l'extrémité aval de la première partie de divergent ou d'un anneau précédemment mis en place. Un divergent de ce type est décrit dans la document US 3 526 365.

Différents mécanismes ont été proposés qui visent tous à assurer un déploiement automatique et fiable avec un minimum de dépense d'énergie. Des mécanismes de déploiement à bras articulés sont décrits notamment dans les documents EP-A-0 516 519, US 3 526 365 et FR-A-2 743 110. D'autres mécanismes, par exemple à bras télescopiques, à vis, à poutres déroulables ou à membrane sont également connus.

Le mécanisme de déploiement peut être actionné par des moyens d'actionnement ne demandant pas de source d'énergie extérieure, par exemple des dispositifs à ressorts, ou par des moyens tels que vérins ou moteurs qui requièrent une source d'énergie électrique ou hydraulique, ou encore un générateur de gaz.

Des dispositifs à ressorts sont utilisés lorsque le déploiement est effectué avant allumage mais s'avèrent généralement insuffisants pour assurer un déploiement fiable après allumage, en raison de l'action des gaz éjectés. Il faut alors avoir recours à des moteurs ou vérins développant une puissance plus élevée.

Or, il est souhaitable de diminuer autant que possible les besoins en énergie requis, et la présente invention a précisément pour but de fournir un divergent déployable dont le déploiement ne nécessite qu'une puissance réduite, et peut donc être effectué après allumage, sans recourir à une source d'énergie extérieure, par exemple simplement au moyen de ressorts.

Ce but est atteint grâce à un divergent déployable pour propulseur comprenant une première partie de divergent, au moins une deuxième partie de divergent sous forme d'un anneau déployable entre une position rétractée dans laquelle il entoure la première partie de divergent et une position déployée dans laquelle il se raccorde à une extrémité aval de la première partie de divergent, un mécanisme de déploiement capable de faire passer l'anneau de divergent de sa position rétractée à sa position déployée, et des moyens d'actionnement du mécanisme de déploiement, lequel divergent est caractérisé en ce qu'une structure provisoire, ou insert, est disposée à l'intérieur de l'anneau de divergent de façon à transformer la veine divergente de celui-ci en une veine non divergente, de préférence sensiblement cylindrique, sur au moins la plus grande partie de la longueur de l'anneau de divergent, l'insert étant éliminable à la venue ou après la venue de l'anneau de divergent dans sa position déployée.

En offrant une surface non divergente, de préférence sensiblement cylindrique, aux gaz de combustion qui circulent dans le divergent, l'insert permet de réduire considérablement l'amplitude de la composante de force axiale s'exerçant sur l'anneau de divergent à l'encontre de son déploiement, c'est-à-dire la composante dirigée vers l'amont (dans le présent texte, les termes amont et aval sont utilisés en relation avec le sens d'écoulement des gaz de combustion dans le divergent).

L'effort de déploiement étant nettement atténué, il est possible d'utiliser des moyens d'actionnement à accumulation d'énergie, par exemple des dispositifs à ressorts, non reliés à une source d'énergie extérieure, pour réaliser le déploiement du divergent après allumage.

Dans le cas où le divergent comporte plusieurs anneaux déployables associés à des mécanismes de déploiement et moyens d'actionnement respectifs, chaque anneau est avantageusement pourvu d'un insert particulier.

L'insert peut être relié à l'anneau de divergent par des moyens de liaison mécanique qui sont libérés ou rompus à la venue ou après la venue de l'anneau de divergent en position déployée, afin de permettre l'expulsion de l'insert. La libération des moyens de liaison est avantageusement réalisée au moyen d'au moins un organe de libération déplaçable entre une première position dans laquelle les moyens de liaison sont verrouillés et une deuxième position dans laquelle les moyens de liaison sont libérés, le déplacement de l'organe de libération pouvant être obtenu automatiquement par contact avec le divergent lors de la venue de l'anneau de divergent en position déployée. La rupture des moyens de liaison peut être provoquée par des moyens pyrotechniques, après venue de l'anneau de divergent en position déployée.

En variante, l'insert est relié à l'anneau de divergent par des moyens de liaison au moins partiellement réalisés en un matériau ayant une tenue éphémère à des gaz de combustion circulant dans le divergent, de manière à être éliminés après venue de l'anneau de divergent en position déployée, afin de permettre l'expulsion de l'insert.

Avantageusement, au moins un élément à ressort est interposé entre une paroi interne de l'anneau de divergent et l'insert et exerce sur l'insert une force ayant au moins une composante axiale dirigée vers l'aval afin de faciliter l'expulsion de l'insert, après libération, rupture ou élimination des moyens de liaison.

Selon encore une autre variante, l'insert lui-même est au moins partiellement réalisé en un matériau ayant une tenue éphémère à des gaz de combustion circulant dans le divergent, de manière à être éliminé après venue de l'anneau de divergent en position déployée.

L'invention sera mieux comprise à la lecture de la description faite ci-après, à titre indicatif mais non limitatif, en référence aux dessins annexés sur lesquels :
- les figures 1 et 2 sont des demi-vues en coupe méridienne d'un divergent déployable selon un mode de réalisation de l'invention, respectivement avant et après déploiement d'un anneau de divergent ;
- les figures 3 et 4 sont des schémas montrant l'action des gaz de combustion circulant dans le divergent sur un anneau en cours de déploiement, respectivement dans un divergent déployable de l'art antérieur, et dans le divergent déployable des figures 1 et 2 ;
- les figures 5 et 6 sont des vues de détail à échelle agrandie illustrant la liaison mécanique entre l'anneau de divergent et l'insert dans le mode de réalisation des figures 1 et 2 ;
- les figures 7 à 9 sont des demi-vues en coupe méridienne illustrant différentes réalisations et fixations d'un insert dans un anneau de divergent selon des variantes de réalisation d'un divergent déployable conforme à l'invention ; et
- les figures 10 et 11 sont des demi-vues en coupe méridienne très schématiques montrant un divergent déployable selon deux autres modes de réalisation de l'invention, dans la configuration initiale.

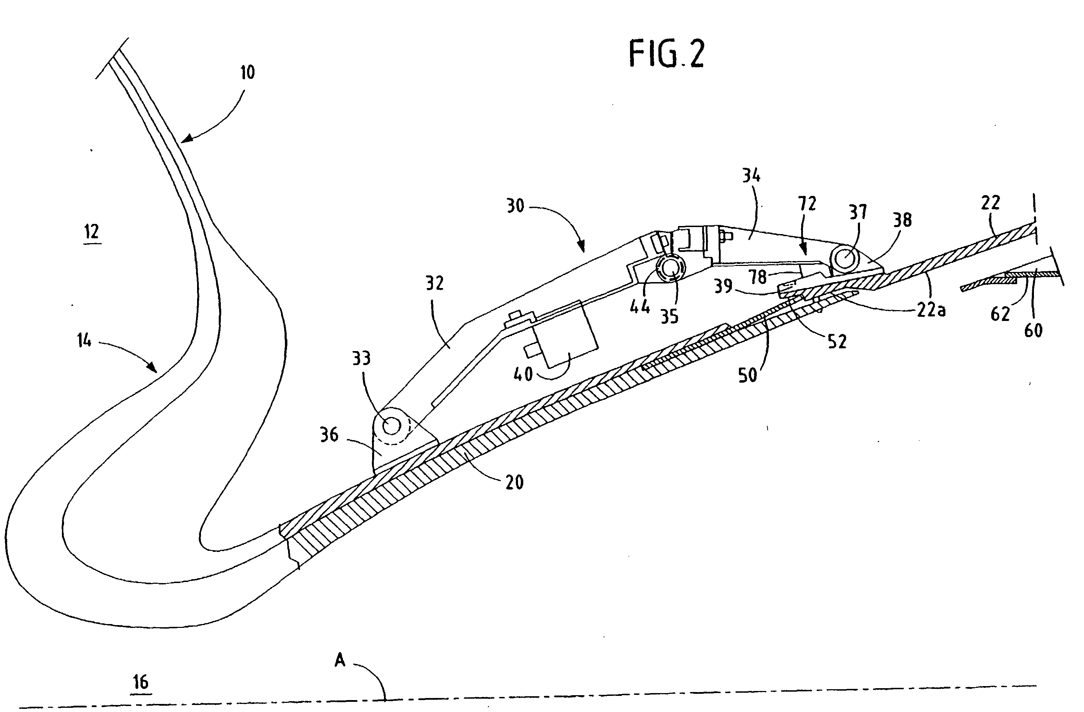

Sur la figure 2, la référence 10 désigne un corps de propulseur ou d'étage de propulseur, par exemple à propergol solide, ayant une chambre de combustion 12. Celle-ci s'ouvre, à travers le fond 14, par un col de tuyère 16 prolongé par une première partie 20 d'un divergent déployable.

L'extrémité amont de la partie de divergent 20 et le col de tuyère 16 sont raccordés au fond 14 par l'intermédiaire d'un cône, dans le cas d'une tuyère fixe ou, dans le cas d'une tuyère articulée, par exemple par une butée flexible.

Le corps 10, le fond 14, le col 16 et la partie 20 de divergent sont revêtus d'un matériau ablatif de protection thermique.

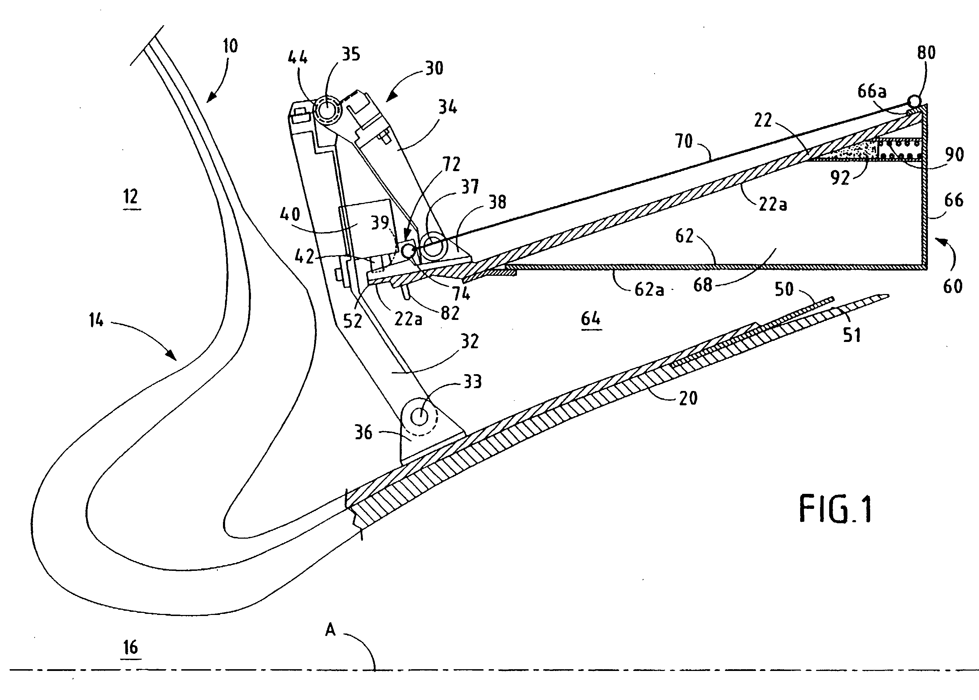

Le divergent déployable comprend en outre un anneau de divergent 22 déplaçable entre une position rétractée (figure 1) où il entoure la partie 20 de divergent en ayant même axe A que celle-ci, et une position déployée dans laquelle il se raccorde avec verrouillage à l'extrémité aval de la partie de divergent 20, et prolonge celle-ci, de manière à former un divergent ayant un diamètre de sortie agrandi (figure 2).

Le maintien de l'anneau de divergent 22 en position rétractée et son guidage vers la position déployée sont assurés au moyen de quatre bras articulés 30 répartis régulièrement autour de la première partie de divergent 20.

Chaque bras 30 comporte un premier segment 32 articulé à une première extrémité sur une platine 36 fixée sur la paroi extérieure de la première partie de divergent 20 (axe 33) et, à une deuxième extrémité, sur une première extrémité d'un deuxième segment 34 (axe 35). A sa deuxième extrémité, le segment 34 est articulé sur une platine 38 fixée sur la paroi extérieure de l'anneau de divergent (axe 37). Les axes d'articulation 33, 35 et 37 aux extrémités des segments 32 et 34 sont perpendiculaires à l'axe A. Comme le montre la figure 1, un dispositif de blocage du bras en position rétractée comprend une butée 40 solidaire du segment 32 et munie d'un ergot 42 qui pénètre dans un logement 39 de la platine 38. Le dégagement de l'ergot 42 hors du logement 39 afin de libérer le bras 30 peut être réalisé par des moyens pneumatiques, par exemple en reliant l'ergot au piston d'un vérin pneumatique, ou par des moyens pyrotechniques. Il n'est pas nécessaire de prévoir un dispositif de blocage sur chaque bras 30, le blocage d'un bras pouvant suffire à maintenir l'ensemble en position rétractée.

Lorsque le bras 30 est libéré, il peut se déployer avec rotation des segments 32, 34 autour de leurs axes d'articulation d'extrémité.

Le déploiement du bras 30 est réalisé au moyen d'un ressort de torsion 44 monté sur l'axe d'articulation 33 et entraînant un arbre de sortie en prise avec le segment 32.

Pour réaliser le déploiement de l'anneau de divergent 22, les quatre bras 30 sont libérés simultanément par déblocage des ergots 42. Les ressorts 44 ainsi libérés provoquent la rotation simultanée des segments de bras 32 et, par là même, le déploiement simultané des bras.

On notera que l'ensemble formé par les quatre bras 30 et l'anneau de divergent 22 est hyperstatique, ce qui fait que l'anneau 22 se déplace sans se déformer et en restant constamment centré sur l'axe A. Le caractère hyperstatique du montage permet donc d'assurer un guidage précis de l'anneau de divergent 22 vers la position déployée, une absence de synchronisme des mouvements des bras étant empêchée. On notera que ce résultat peut toujours être obtenu en montant un ressort de torsion sur seulement certains des bras, voire même sur un seul.

Des moyens sont prévus, à la périphérie de l'extrémité aval de la partie de divergent 20 et à la périphérie de l'extrémité amont de l'anneau de divergent 22 pour assurer leur verrouillage mutuel lorsque l'anneau de divergent parvient en position déployée.

Dans l'exemple illustré, ces moyens de verrouillage sont constitués par une pluralité de languettes flexibles 50 qui sont fixées à la périphérie de l'extrémité aval de la partie de divergent 20, du côté extérieur, et par un décrochement annulaire 52 formé à l'extrémité amont de l'anneau de divergent 22, du côté intérieur.

Lorsque l'anneau de divergent 22 parvient à proximité de sa position complètement déployée, la paroi interne 22a de l'anneau 22 prend appui sur les languettes 50, faisant fléchir celles-ci vers l'axe du divergent. A cet effet, les languettes 50 ménagent, dans leur partie d'extrémité libre, un espace 51 avec la paroi extérieure de la partie de divergent 20.

La position des languettes 50 est déterminée, de même que celle du décrochement 52, pour que les languettes s'encliquettent dans le décrochement 52 dès que l'anneau de divergent 22 parvient en position déployée. Le verrouillage de l'anneau de divergent 22 sur la partie de divergent 20 est ainsi assuré. On notera que la précision apportée par le montage hyperstatique autorise ce mode de verrouillage automatique. On notera aussi que le décrochement 52 pourra être remplacé par une pluralité de logements correspondant aux languettes 50.

Un divergent déployable comprenant un mécanisme de déploiement formé d'un ensemble hyperstatique à bras articulés et avec verrouillage de l'anneau de divergent déployé à l'extrémité de la première partie de divergent est décrit dans la demande de brevet FR 95 15 634 de la déposante.

Conformément à la présente invention, l'anneau de divergent 22 est en outre muni d'une structure provisoire, ou insert 60 qui est disposé à l'intérieur de l'anneau de façon à transformer la veine divergente formée par la paroi interne 22a de l'anneau en une veine non divergente, sur au moins la plus grande partie de la longueur de l'anneau. L'insert 60 est monté et/ou conçu de manière à être complètement éliminable à la venue ou immédiatement après la venue de l'anneau 22 en position déployée.

Dans le mode de réalisation des figures 1 et 2, l'insert 60 comprend une partie tubulaire rigide 62 dont la paroi interne 62a définit une veine non divergente 64. La partie tubulaire 62 a même axe que l'anneau 22 et s'étend sur pratiquement toute la longueur de l'anneau depuis un emplacement situé immédiatement en aval de la partie amont de l'anneau 22 qui vient coiffer l'extrémité de la partie 20 de tuyère en fin de déploiement. Un joint d'étanchéité 63 assure l'étanchéité entre l'extrémité amont de la partie tubulaire 62 et la paroi interne de l'anneau 22. Le diamètre interne de la partie tubulaire est sensiblement constant et égal à celui de l'extrémité amont de l'anneau 22, définissant ainsi une veine cylindrique 64 dont le diamètre est sensiblement égal à celui de la sortie de la partie 20 de divergent.

La partie tubulaire 62 se raccorde à l'extrémité aval de l'anneau de divergent par une plaque de fond annulaire 66 perpendiculaire à l'axe de l'anneau 22. Des raidisseurs sous forme de plaques triangulaires 68 sont répartis autour de la partie tubulaire 62. Les raidisseurs sont disposés dans des plans radiaux entre la paroi extérieure de la partie tubulaire 62 et la paroi interne 22a de l'anneau 22. La liaison entre la partie tubulaire 62, le fond 66 et les raidisseurs 68 est réalisée par exemple par collage ou par soudure, ces différents éléments constitutifs de l'insert étant par exemple en métal, tel que de l'aluminium. L'insert peut alors être muni, sur sa paroi définissant la veine cylindrique 64, d'une protection thermique constituée par exemple d'une feuille d'élastomère collée. D'autres matériaux pourraient être utilisés, par exemple des matériaux composites à renfort en fibres, par exemple de verre ou de carbone et à matrice résine, par exemple phénolique ou époxy.

La présence de l'insert 60 permet de fortement minimiser les efforts axiaux s'opposant au déploiement lors du déplacement de l'anneau de divergent et dus aux gaz de combustion circulant dans le divergent.

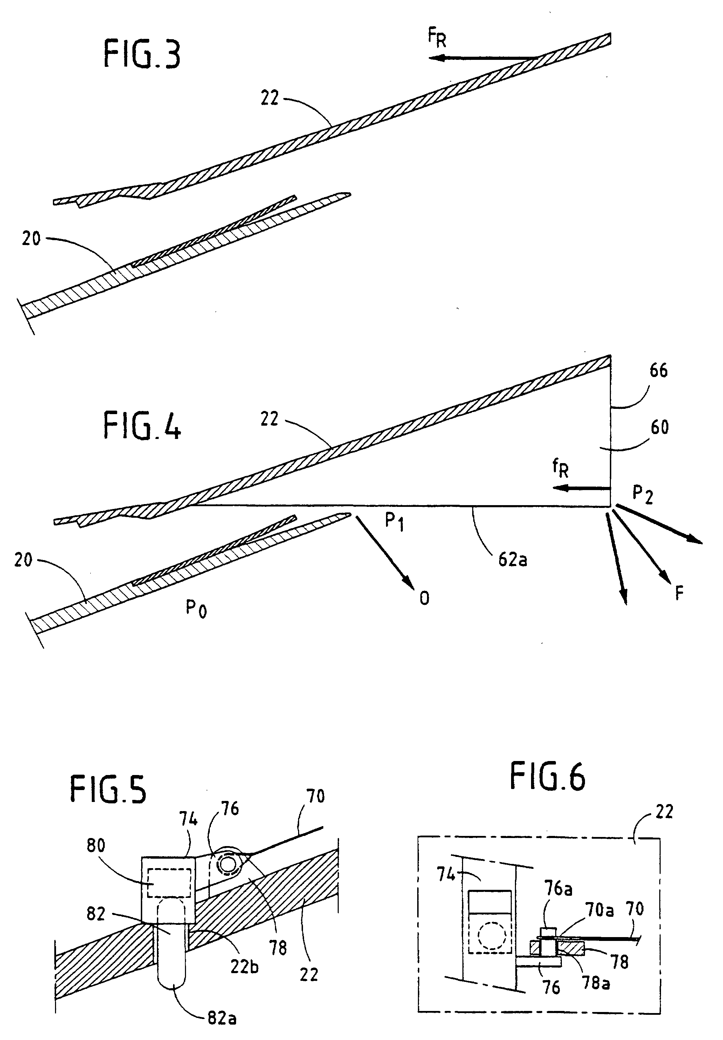

En l'absence d'insert de déploiement, comme illustré schématiquement par la figure 3, le jet de gaz de combustion exerce sur la face interne 22a de l'anneau 22 en cours de déploiement des effets qui se traduisent par une composante axiale F_{R} dirigée vers l'amont, donc s'opposant au déploiement. Dans ce cas, des moyens d'actionnement à accumulation d'énergie, tels que des dispositifs à ressorts, peuvent s'avérer insuffisants et la puissance requise doit être fournie par dcs moteurs ou vérins électriques ou hydrauliques reliés à une source d'énergie extérieure.

Lorsque l'insert de déploiement est présent (figure 4), et pénètre dans le jet de gaz de combustion, une onde de choc O se crée suivie d'un faisceau de détente F_{D} à l'extrémité aval de l'anneau de divergent 22. Sur la partie de la paroi interne 62a de l'insert exposée au jet, la vitesse des gaz diminue et la pression P₁ est supérieure à celle P₀ qui s'exerce sur la face interne de la partie 20 de divergent. Cette pression s'exerçant sur une surface cylindrique, elle n'induit aucune composante de force axiale dirigée vers l'amont susceptible de s'opposer au déploiement. A l'extrémité aval de l'anneau 22, la vitesse des gaz augmente fortement, mais la pression P₂ diminue. Il en résulte une pression éventuelle faible s'exerçant vers l'amont sur la face extérieure du fond 66 de l'insert, donc une composante de force axiale f_{R} d'amplitude faible s'opposant au déploiement. Pour cette raison, le déploiement peut facilement être réalisé avec le ou les ressorts de torsion 44. La faculté d'actionner le mécanisme de déploiement par des moyens à accumulation d'énergie non connectés à une source d'énergie extérieure, voire éventuellement par des moyens moteurs électriques ou hydrauliques de puissance réduite, constitue un avantage essentiel de l'invention.

Dans le mode de réalisation des figures 1 et 2, l'insert 60 définit une veine cylindrique 64. Celle-ci pourrait être légèrement convergente en donnant à la partie tubulaire 62 une forme faiblement tronconique. Dans ce cas, la pression P₁ induit sur l'anneau 22 en cours de déploiement une composante de force axiale dirigée vers l'aval, qui assiste le déploiement. La convergence de la veine 64 doit toutefois rester suffisamment faible pour ne pas perturber le jet de gaz de combustion, ne pas exercer d'efforts trop importants sur le mécanisme de déploiement et ne pas gêner l'accrochage de l'anneau de divergent à la fin de son déploiement.

Les figures 5 et 6 illustrent plus en détail la liaison mécanique entre l'insert 60 et l'anneau de divergent 22, respectivement en coupe et en vue de dessus. Cette liaison mécanique étant réalisée de manière à être libérée automatiquement au moment de la venue de l'anneau 22 en position déployée, de sorte que l'insert peut alors être éjecté hors du divergent.

La liaison mécanique comprend des élingues 70, par exemple au nombre de quatre, réparties régulièrement autour de l'axe de l'anneau 22. Chaque élingue 70, par exemple en acier, s'étend dans un plan radial. Elle est reliée, à une première extrémité à un premier dispositif d'ancrage 72, du côté extérieur de l'anneau 22, au voisinage de son extrémité amont. A l'autre extrémité, chaque élingue est reliée à la plaque de fond 66 de l'insert, au moyen d'un anneau 84 fixé sur un rabat 66a de la plaque de fond 66, sur le pourtour extérieur de celle-ci.

Le dispositif d'ancrage 72 comprend un jonc 74, par exemple en acier, qui encercle l'anneau 22. Le jonc 74 porte quatre crochets 76, répartis angulairement autour de l'anneau 22. Chaque crochet 76 a son extrémité en forme de doigt 76a qui est guidé à travers un trou 78a d'une platine 78 fixée sur la paroi extérieure de l'anneau 22, chaque doigt 76a s'étendant sensiblement en direction circonférentielle. A sa première extrémité, chaque élingue 70 est accrochée sur l'extrémité d'un doigt 76a qui fait saillie à travers la platine 78. Le jonc 74 est à section en U s'ouvrant vers la surface extérieure de l'anneau 22. A l'intérieur, le jonc 74 présente plusieurs parois 80 perpendiculaires à ses parois latérales. Les parois 80 sont inclinées, par exemple à environ 45° par rapport à un plan méridien situé à leur niveau et forment des rampes sur lesquelles s'appuient des extrémités de doigts ou palpeurs 82. Chaque palpeur 82 traverse la paroi de l'anneau 22 à travers un trou radial 22b et fait saillie par une extrémité 82a à l'intérieur de l'anneau 22.

Un tendeur peut être monté sur chaque élingue entre ses extrémités.

Lorsque l'anneau 22 parvient en position déployée, les extrémités 82a des palpeurs 82 sont repoussées par contact avec la paroi externe de la partie 20 de divergent et, par appui sur les rampes 80 provoquent une rotation du jonc 74 autour de l'anneau 22. Les crochets 76 étant déplacés avec le jonc 74, les doigts 76a sont extraits des trous 78a et libèrent les élingues 70. Le jonc 74 assure la synchronisation du déverrouillage des élingues.

L'insert 60 n'étant plus retenu, il est éjecté du divergent par le jet de gaz de combustion avec les élingues 70. Afin de faciliter cette éjection, un ou plusieurs ressorts 90 sont précomprimés entre la face interne du fond 66 et un appui 92 en mousse rigide qui s'appuie sur la face interne 22a de l'anneau 22. Le ressort 90 et l'appui 92 sont logés dans un tube, par exemple en aluminium collé sur le fond 66. A son extrémité opposée à celle en contact avec le ressort 90, l'appui 92 est conformé pour épouser sensiblement la surface interne 22a de l'anneau 22.

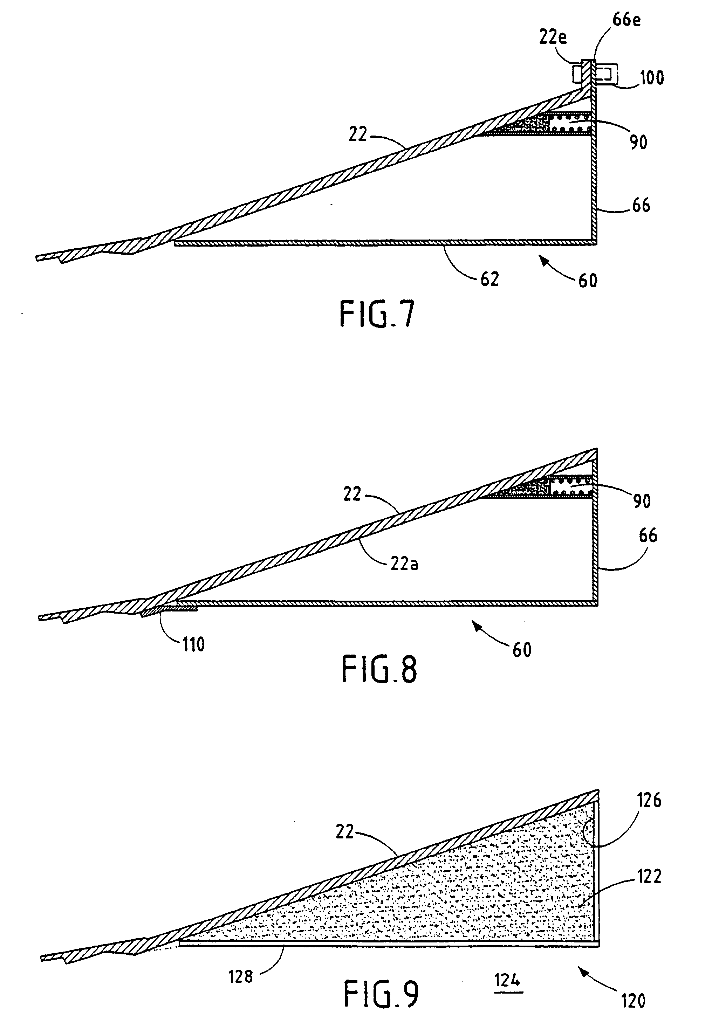

La figure 7 illustre schématiquement un autre mode de réalisation de la liaison mécanique entre l'insert 60 et l'anneau 22, permettant une rupture de la liaison par des moyens pyrotechniques. Le fond 66 de l'insert est prolongé à sa périphérie par une couronne 66c qui s'appuie contre une couronne 22e à l'extrémité aval de l'anneau 22. La liaison entre l'insert 60 et l'anneau est assurée par des boulons explosifs 100 qui relient les couronnes 66e et 22e, autour de l'axe de l'anneau.

Lorsque l'anneau 22 parvient en position déployée et s'accroche sur la partie fixe de divergent, la destruction des boulons 100 est commandée. L'insert 60 est alors éjecté, avec l'assistance des ressorts d'éjection 90.

Dans le mode de réalisation de la figure 8, l'insert 80 est fixé à l'intérieur de l'anneau 22 au moyen d'une bande 110 collée à la fois sur la surface interne 62a de l'insert, à son extrémité amont, et sur la surface interne 22a de l'anneau 22. La bande 110 est en un matériau détruit progressivement par les gaz de combustion circulant dans la tuyère, dès qu'elle est soumise à l'action de ces gaz, c'est-à-dire dès la venue de l'anneau 22 en position déployée. On pourra par exemple utiliser une bande en résine thermoplastique, par exemple en PVC.

Lorsque la bande 110 est détruite, l'insert 60 est libéré et est éjecté avec l'assistance des ressorts d'éjection 90.

Dans un autre mode de réalisation illustré par la figure 9, l'anneau 22 est muni d'un insert 120 essentiellement constitué par un bloc 122 de matériau détruit par les gaz de combustion circulant dans la tuyère, par exemple une mousse thermodégradable telle que du polyuréthane. Le bloc 122 est collé sur la face interne de l'anneau 22. Il peut être muni, sur sa surface interne définissant la veine cylindrique 124, et sur sa surface de fond 126, d'une enveloppe collée 128 protégeant l'insert jusqu'à son utilisation. L'enveloppe 128 est également en un matériau consommé ou sublimé par les gaz de combustion.

Dans ce qui précède, il a été envisagé une tuyère à un seul anneau déployable. L'invention est applicable également à des tuyères munies de plusieurs anneaux de divergent destinés à être déployés successivement ou simultanément, pendant le vol du propulseur.

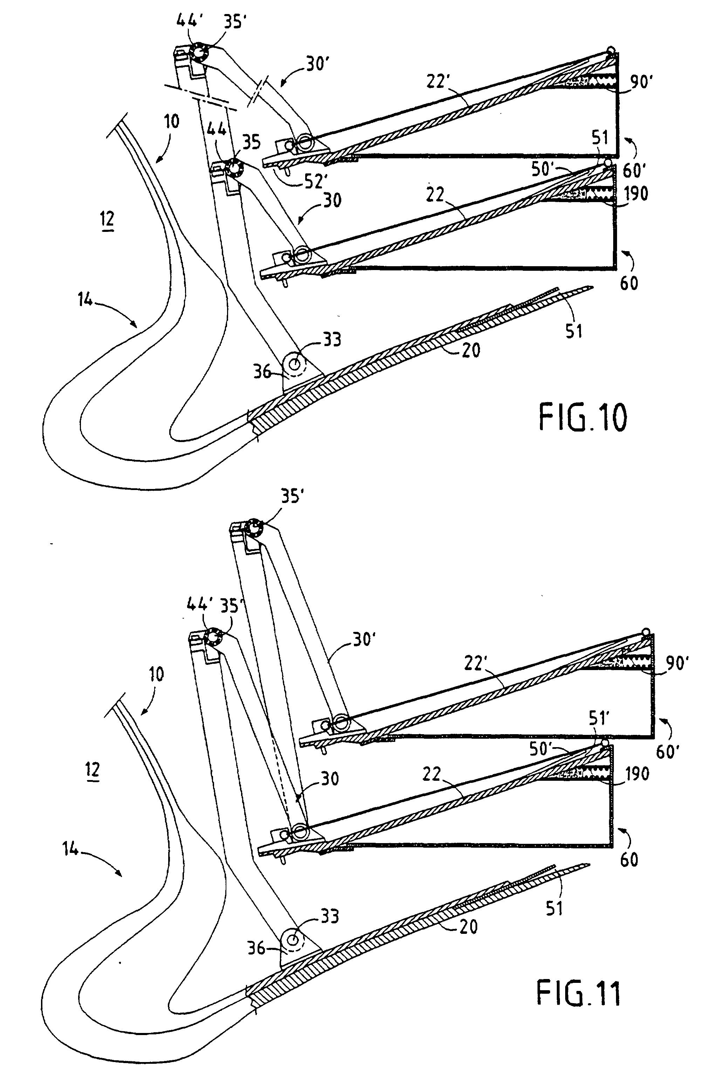

La figure 10 montre une tuyère à deux anneaux déployables à l'état rétracté. Cette tuyère se distingue de celle des figures 1 et 2 simplement par l'adjonction, d'un deuxième anneau déployable 22', muni d'un mécanisme de déploiement et de moyens d'actionnement propres, et par le fait que le premier anneau 22 est conformé à son extrémité amont de manière à permettre le verrouillage du deuxième anneau 22' en position déployée.

A l'état complètement rétracté (figure 10), l'anneau 22' entoure l'anneau 22. Il est maintenu en position rétractée par un ou plusieurs bras articulés 30' qui sont bloqués en position repliée, de la même façon que les bras 30. Les bras 30' sont fixés, à une extrémité, sur la paroi externe de la partie 20 de divergent et à l'autre extrémité sur l'anneau 22'. L'actionnement des bras 30' est réalisé par un ou plusieurs ressorts de torsion 44' montés au niveau des articulations 35'. Avantageusement, l'articulation 35 de chaque bras 30 est fixée sur la partie de bras 30' qui s'étend entre la partie de divergent et l'articulation 65', de sorte que cette partie de bras est partagée par les bras 30 et 30'.

Selon une autre réalisation possible (figure 11), les bras 30' sont fixés à une extrémité sur l'anneau 22 et à l'autre extrémité sur l'anneau 22', l'articulation des bras 30 et 30' sur l'anneau 22 étant commune.

L'anneau 22' est muni d'un insert 60' semblable à celui 60 équipant l'anneau 22. La liaison de l'insert 60' sur l'anneau 22' et/ou la constitution de l'insert 60' peuvent être similaires à celles décrites en référence aux figures 5 à 9.

A son extrémité aval, l'anneau 22 est muni de moyens de verrouillage constitués par une pluralité de languettes flexibles 50', destinées à coopérer avec un décrochement 52' formé à l'extrémité amont de l'anneau de divergent 22', les languettes 50' ménageant à cet effet, dans leur partie d'extrémité libre, un espace 51' avec la paroi extérieure de l'anneau 22. De la sorte, l'anneau 22' peut se verrouiller à l'extrémité de l'anneau 22, de la même façon que celui-ci se verrouille à l'extrémité de la partie 20 de divergent.

L'expulsion de l'insert 60 se produit à la venue de l'anneau 22 en position déployée, avec l'assistance de ressorts d'éjection 90, et celle de l'insert 60' à la venue de l'anneau 22' en position déployée, avec l'assistance de ressorts d'éjection 90' analogues aux ressorts 90.

L'utilisation d'un mécanisme de déploiement et de moyens d'actionnement propres pour l'anneau 22' permet de déployer celui-ci après l'anneau 22 et indépendamment du déploiement de celui-ci.

Lorsque l'anneau supplémentaire à raccorder à la partie de divergent 20 doit avoir une longueur telle que des problèmes d'encombrement sont rencontrés à l'état rétracté, cet anneau est fractionné en plusieurs anneaux déployables qui sont déployés en même temps par déclenchement simultané de leurs moyens d'actionnement.

Dans la description qui précède, on a envisagé un mécanisme de déploiement constitué de bras articulés. Il apparaîtra immédiatement à l'homme de métier que l'invention est applicable à des tuyères déployables utilisant divers types de mécanismes de déploiement, par exemple à bras télescopiques, à vis, à poutre déroulable, ou autres, associés à divers types de moyens d'actionnement utilisant ou non une source d'énergie extérieure.

## Revendications

1. Divergent déployable pour propulseur comprenant une première partie de divergent (20), au moins une deuxième partie de divergent sous forme d'un anneau (22) déplaçable entre une position rétractée dans laquelle il entoure la première partie de divergent et une position déployée dans laquelle il se raccorde à une extrémité aval de la première partie de divergent, un mécanisme de déploiement (30) capable de faire passer l'anneau de divergent de sa position rétractée à sa position déployée, et des moyens (44) d'actionnement du mécanisme de déploiement, **caractérisé en ce qu'**une structure provisoire, ou insert (60 ; 120), est disposée à l'intérieur de l'anneau de divergent (22) de façon à transformer la veine divergente de celui-ci en une veine non divergente, sur au moins la plus grande partie de la longueur de l'anneau de divergent, l'insert étant éliminable à la venue ou après la venue de l'anneau de divergent dans sa position déployée.

2. Divergent déployable, selon la revendication 1, **caractérisé en ce qu'**il comporte au moins une troisième partie de divergent sous forme d'un deuxième anneau (22') déplaçable entre une position rétractée dans laquelle il entoure la première partie de divergent et une position déployée dans laquelle il se raccorde à une extrémité aval du premier anneau déplaçable, un deuxième mécanisme de déploiement (30') capable de faire passer le deuxième anneau de divergent de sa position rétractée à sa position déployée, des moyens d'actionnement (44') pour actionner le deuxième mécanisme de déploiement, et une structure provisoire, ou insert (60'), disposée à l'intérieur du deuxième anneau déplaçable de façon à transformer la veine divergente de celui-ci en une veine non divergente, sur au moins la plus grande partie de la longueur de l'anneau de divergent, l'insert étant éliminable à la venue ou après la venue du deuxième anneau déplaçable dans sa position déployée.

3. Divergent déployable selon l'une quelconque des revendications 1 et 2, **caractérisé en ce que** l'insert (60 ; 60' ; 120) définit une veine sensiblement cylindrique.

4. Divergent déployable selon l'une quelconque des revendications 1 à 3, **caractérisé en ce que** les moyens d'actionnement comportent des moyens (44, 44') à accumulation d'énergie non reliés à une source d'énergie extérieure.

5. Divergent déployable selon la revendication 4, **caractérisé en ce que** les moyens d'actionnement comportent des dispositifs à ressorts (44, 44').

6. Divergent déployable selon l'une quelconque des revendications 1 à 5, **caractérisé en ce que** l'insert (60) est relié à l'anneau de divergent par des moyens de liaison mécanique (70, 72) libérables à la venue de l'anneau de divergent (22) dans sa position déployée, afin de permettre l'expulsion de l'insert.

7. Divergent déployable selon la revendication 6, **caractérisé en ce que** les moyens de liaison mécanique comprennent au moins un organe d'accrochage (76) déplaçable entre une première position dans laquelle l'anneau de divergent (22) est retenu et une deuxième position dans laquelle l'anneau de divergent est libéré.

8. Divergent déployable selon la revendication 7, **caractérisé en ce que** l'organe d'accrochage (76) est déplacé automatiquement sous l'action d'un palpeur (82) actionné par contact avec le divergent lors de la venue de l'anneau de divergent (22) en position déployée.

9. Divergent déployable selon l'une quelconque des revendications 7 et 8, **caractérisé en ce qu'**il comprend plusieurs organes d'accrochage (76) permettant de retenir l'insert (60) au moyen de plusieurs organes de liaison mécanique (70) et les organes d'accrochage (76) sont montés sur une pièce annulaire (74) entourant l'anneau de divergent et déplaçable automatiquement sous l'action d'au moins un palpeur (82) lors de la venue de l'anneau de divergent en position déployée, de sorte que les organes de liaison (70) sont libérés simultanément.

10. Divergent déployable selon l'une quelconque des revendications 1 à 5, **caractérisé en ce que** l'insert (60) est relié à l'anneau de divergent (22) par des moyens de liaison mécanique (100), et des moyens sont prévus pour provoquer la rupture de la liaison mécanique après venue de l'anneau de divergent en position déployée, afin de permettre l'expulsion de l'insert.

11. Divergent déployable selon la revendication 10, **caractérisé en ce que** les moyens de rupture de la liaison mécanique sont des moyens pyrotechniques.

12. Divergent déployable selon l'une quelconque des revendications 1 à 5, **caractérisé en ce que** l'insert (60) est relié à l'anneau de divergent (22) par des moyens de liaison (110) au moins partiellement réalisés en un matériau ayant une tenue éphémère à des gaz de combustion circulant dans le divergent, de manière à être éliminés après venue de l'anneau de divergent en position déployée, afin de permettre l'expulsion de l'insert.

13. Divergent déployable selon l'une quelconque des revendications 6 à 12, **caractérisé en ce qu'**au moins un élément à ressort (90, 90') est interposé entre une paroi interne de l'anneau de divergent (22, 22') et l'insert (60, 60') et exerce sur l'insert une force ayant au moins une composante axiale dirigée vers l'aval afin de faciliter l'expulsion de l'insert.

14. Divergent déployable selon l'une quelconque des revendications 1 à 5, **caractérisé en ce que** l'insert (120) est au moins partiellement réalisé en un matériau ayant une tenue éphémère à des gaz de combustion circulant dans le divergent, de manière à être éliminé après venue de l'anneau de divergent (22) en position déployée.

15. Divergent déployable selon l'une quelconque des revendications 1 à 14, **caractérisé en ce que** l'insert (60) comprend une partie tubulaire rigide (62) définissant la veine non divergente et reliée à une paroi de l'anneau de divergent (22).

## Claims

1. A deployable diverging part for a thruster, the part comprising a first portion of diverging part (20), at least one second portion of diverging part in the form of a ring (22) displaceable between a retracted position in which it surrounds the first portion of diverging part and a deployed position in which it is connected to a downstream end of the first portion of diverging part, a deployment mechanism (30) capable of causing the diverging ring to pass from its retracted position to its deployed position, and actuation means (44) for actuating the deployment mechanism, the diverging part being **characterised in that** a temporary structure, or "insert" (60; 120), is disposed inside the diverging ring (22) so as to transform the diverging section thereof into a non-diverging section, at least over the major fraction of the length of the diverging ring, the insert being eliminatable on or after the coming of the diverging ring into its deployed position.

2. A deployable diverging part according to claim 1, **characterised in that** it includes at least one third portion of diverging part in the form of a second ring (22') displaceable between a retracted position in which it surrounds the first portion of diverging part and a deployed position in which it is connected to a downstream end of the first displaceable ring, a second deployment mechanism (30') capable of causing the second diverging ring to pass from its retracted position to its deployed position, actuation means (44') for actuating the second deployment mechanism, and a temporary structure, or "insert" (60'), disposed inside the second displaceable ring so as to transform the diverging section thereof into a non-diverging section, at least over the major fraction of the length of the diverging ring, the insert being eliminatable on or after the coming of the second displaceable ring into its deployed position.

3. A deployable diverging part according to claim 1 or 2, **characterised in that** the insert (60; 60'; 120) defines a section that is substantially cylindrical.

4. A deployable diverging part according to any one of claims 1 to 3, **characterised in that** the actuation means comprise energy storage means (44, 44') that are not connected to an external energy source.

5. A deployable diverging part according to claim 4, **characterised in that** the actuation means comprise spring devices (44, 44').

6. A deployable diverging part according to any one of claims 1 to 5, **characterised in that** the insert (60) is connected to the diverging ring by mechanical link means (70, 72) that are releasable when the diverging ring (22) comes into its deployed position, in order to enable the insert to be expelled.

7. A deployable diverging part according to claim 6, **characterised in that** the mechanical link means comprise at least one fastening member (76) displaceable between a first position in which the diverging ring (22) is retained and a second position in which the diverging ring is released.

8. A deployable diverging part according to claim 7, **characterised in that** the fastening member (76) is displaced automatically under drive from a feeler (82) actuated by coming into contact with the diverging part when the diverging ring (22) comes into its deployed position.

9. A deployable diverging part according to claim 7 or 8, **characterised in that** it comprises a plurality of fastening members (76) enabling the insert (60) to be retained by means of a plurality of mechanical link members (70), and the fastening members (76) are mounted on an annular piece (74) surrounding the diverging ring and automatically displaceable under drive from at least one feeler (82) when the diverging ring comes into its deployed position, so that the link members (70) are released simultaneously.

10. A deployable diverging part according to any one of claims 1 to 5, **characterised in that** the insert (60) is connected to the diverging ring (22) by mechanical link means (100), and means are provided to cause the mechanical link to break after the diverging ring has come into its deployed position so as to allow the insert to be expelled.

11. A deployable diverging part according to claim 10, **characterised in that** the means for breaking the mechanical link are pyrotechnic means.

12. A deployable diverging part according to any one of claims 1 to 5, **characterised in that** the insert (60) is connected to the diverging ring (22) by link means (110) that are made at least in part out of a material of link means (110) that are made at least in part out of a material of strength that is ephemeral in the combustion gas flowing through the diverging part, so as to be eliminated after the diverging ring has come into the deployed position, in order to enable the insert to be expelled.

13. A deployable diverging part according to any one of claims 6 to 12, **characterised in that** at least one spring element (90, 90') is interposed between an inside wall of the diverging ring (22, 22') and the insert (60, 60') and exerts a force on the insert having at least an axial component directed downstream so as to facilitate expulsion of the insert.

14. A deployable diverging part according to any one of claims 1 to 5, **characterised in that** the insert (120) is made at least in part out of a material of strength that is ephemeral in the combustion gas flowing through the diverging part, so as to be eliminated after the diverging ring (22) has come into the deployed position.

15. A deployable diverging part according to any one of claims 1 to 14, **characterised in that** the insert (60) comprises a rigid tubular portion (62) defining the non-diverging section and connected to a wall of the diverging ring (22).

## Patentansprüche

1. Ausschwenkbares Triebwerk-Auslaufteil, umfassend einen ersten Auslaufteil-Abschnitt (20), mindestens einen zweiten Auslaufteil-Abschnitt in Form eines Rings (22), der beweglich ist zwischen einer zurückgezogenen Stellung, in der er den ersten Auslaufteil-Abschnitt umgibt, und einer ausgeschwenkten Stellung, in der er an das stromabwärtige Ende des ersten Abschnitts anschließt, einen Ausschwenkmechanismus (30), der in der Lage ist, den Auslaufring aus dessen zurückgezogener Stellung in seine ausgeschwenkte Stellung übergehen zu lassen, und eine Betätigungseinrichtung (44) des Ausschwenkmechanismus,
**dadurch gekennzeichnet, dass** eine provisorische Struktur oder ein Einsatz (60; 120) an der Innenseite des Auslaufrings (22) derart angeordnet ist, dass er den Auslaufabschnitt des Rings in einen nicht-auslaufenden Abschnitt umwandelt, zumindest auf dem größten Teil der Länge des Auslaufrings, wobei der Einsatz bei oder nach der Ankunft des Auslaufrings in der ausgeschwenkten Stellung freigebbar ist.

2. Ausschwenkbares Auslaufteil nach Anspruch 1,
**dadurch gekennzeichnet, dass** es mindestens einen dritten Auslaufteil in Form eines zweiten Rings (22') aufweist, der zwischen einer zurückgezogenen Stellung, in der er den ersten Auslaufteil umgibt, und einer ausgefahrenen Stellung, in der er an das strornabwärtige Ende des ersten Auslaufrings anschließt, verlagerbar ist, ein zweiter Ausschwenkmechanismus (30') in der Lage ist, den zweiten Auslaufring aus seiner zurückgezogenen Stellung in seine ausgeschwenkte Stellung zu bringen, eine Betätigungseinrichtung (44') vorgesehen ist, um den zweiten Ausschwenkmechanismus zu betätigen, und eine provisorische Struktur oder einen Einsatz (60') an der Innenseite des zweiten Rings angeordnet und derart verlagerbar ist, dass der Auslaufabschnitt von Letzterem in einen nicht-auslaufenden Abschnitt transformiert wird, zumindest auf dem größten Teil der Länge des Auslaufrings, wobei der Einsatz bei oder nach der Ankunft des zweiten verlagerbaren Rings in seiner ausgeschwenkten Stellung freigebbar ist.

3. Ausschwenkbares Auslaufteil nach einem der Ansprüche 1 und 2,
**dadurch gekennzeichnet, dass** der Einsatz (60; 60'; 120) einen im Wesentlichen zylindrischen Querschnitt definiert.

4. Ausschwenkbares Auslaufteil nach einem der Ansprüche 1 bis 3,
**dadurch gekennzeichnet, dass** die Betätigungseinrichtung eine Energiespeichereinrichtung (44, 44') aufweist, die nicht an eine externe Energiequelle gebunden ist.

5. Ausschwenkbares Auslaufteil nach Anspruch 4,
**dadurch gekennzeichnet, dass** die Betätigungseinrichtung Federeinrichtungen (44, 44') aufweist.

6. Ausschwenkbares Auslaufteil nach einem der Ansprüche 1 bis 5,
**dadurch gekennzeichnet, dass** der Einsatz (60) mit dem Auslaufring über mechanische Verbindungsmittel (70, 72) verbunden ist, die bei Ankunft des Auslaufrings (22) in der ausgeschwenkten Stellung freisetzbar sind, um ein Austreiben des Einsatzes zu ermöglichen.

7. Ausschwenkbares Auslaufteil nach Anspruch 6,
**dadurch gekennzeichnet, dass** die mechanischen Verbindungseinrichtungen mindestens ein Verankerungsorgan (76) aufweisen, das verlagerbar ist zwischen einer ersten Stellung, in der der Auslaufring (22) gehalten wird, und einer zweiten Stellung, in der der Auslaufring freigesetzt ist.

8. Ausschwenkbares Auslaufteil nach Anspruch 7,
**dadurch gekennzeichnet, dass** das Verankerungsorgan (76) automatisch verlagerbar ist unter der Einwirkung eines Fühlers (82), der durch Berührang mit dem Auslaufteil bei der Ankunft des Auslaufrings (22) in der ausgeschwenkten Stellung betätigt wird.

9. Ausschwenkbares Auslaufteil nach einem der Ansprüche 7 und 8,
**dadurch gekennzeichnet, dass** es mehrere Verankerungsorgane (76) aufweist, die es ermöglichen, den Einsatz (60) zumindest von mehreren mechanischen Verbindungsorganen (70) halten zu lassen, und die Verankerungsorgane (76) an einem Ringteil (74) gelagert sind, welches den Auslaufring umgibt und automatisch unter der Einwirkung von mindestens einem Fühler (82) bei der Ankunft des Auslaufrings in der ausgeschwenkten Stellung verlagerbar ist, derart, dass die Verbindungsorgane (70) gleichzeitig freigesetzt werden.

10. Ausschwenkbares Auslaufteil nach einem der Ansprüche 1 bis 5,
**dadurch gekennzeichnet, dass** der Einsatz (60) mit dem Auslaufring (22) über mechanische Verbindungsmittel (100) verbunden ist und Mittel vorgesehen sind, um ein Brechen der mechanischen Verbindung zu veranlassen, nachdem der Auslaufring in der ausgeschwenkten Stellung angekommen ist, um den Einsatz austreiben zu können.

11. Ausschwenkbares Auslaufteil nach Anspruch 10,
**dadurch gekennzeichnet, dass** die Mittel zum Brechen der mechanischen Verbindung pyrotechnische Mittel sind.

12. Ausfahrbares Auslaufteil nach einem der Ansprüche 1 bis 5,
**dadurch gekennzeichnet, dass** der Einsatz (60) mit dem Auslaufring (22) über Verbindungsmittel (110) verbunden ist, die zumindest teilweise aus einem Material gefertigt sind, das eine geringe Widerstandsfähigkeit gegenüber den in dem Auslaufteil zirkulierenden Verbrennungsgasen besitzt, derart, dass das Material nach der Ankunft des Auslaufrings in der ausgeschwenkten Stellung eliminiert ist, um ein Austreiben des Einsatzes zu ermöglichen.

13. Ausschwenkbares Auslaufteil nach einem der Ansprüche 6 bis 10,
**dadurch gekennzeichnet, dass** mindestens ein Federelement (90, 90') zwischen einer Innenwand des Auslaufrings (22, 22') und dem Einsatz (60, 60') angeordnet ist und auf den Einsatz eine Kraft ausübt, die mindestens eine axiale Komponente besitzt, die stromabwärts gerichtet ist, um das Austreiben des Einsatzes zu erleichtern.

14. Ausschwenkbares Auslaufteil nach einem der Ansprüche 1 bis 5,
**dadurch gekennzeichnet, dass** der Einsatz (120) mindestens teilweise aus einem Material gebildet ist, das eine geringe Widerstandsfähigkeit für in dem Auslaufteil zirkulierende Verbrennungsgase besitzt, derart, dass es nach der Ankunft des Auslaufrings (22) in der ausgeschwenkten Stellung eliminiert ist.

15. Ausschwenkbares Auslaufteil nach einem der Ansprüche 1 bis 14,
**dadurch gekennzeichnet, dass** der Einsatz (60) ein starres rohrförmiges Teil (62) aufweist, das einen nicht auslaufenden Querschnitt definiert und an eine Wand des Auslaufrings (22) gekoppelt ist.
